# EUROPEAN PATENT SPECIFICATION

(11) **EP 1 998 495 B1**
(45) Date of publication and mention of the grant of the patent: **23.02.2011**
(21) Application number: 07720399.0
(22) Date of filing: 14.03.2007
(51) Int. Cl.: H04L 12/14

(54) **COMMUNICATION SYSTEM, DEVICE AND CHARGE METHOD**
KOMMUNIKATIONSSYSTEM, EINRICHTUNG UND GEBÜHRENBERECHNUNGSSYSTEM
SYSTÈME, DISPOSITIF DE COMMUNICATION ET PROCÉDÉ DE FACTURATION

(30) Priority: 20.03.2006 CN 200610065547
(43) Date of publication of application: 03.12.2008
(73) Proprietor: Huawei Technologies Co., Ltd., Longgang District, Shenzhen Guangdong 518129 (CN)
(72) Inventor: MO, Xiaojun, Guangdong 518129 (CN); LIU, Bin, Guangdong 518129 (CN); LIAN, Shaoxiong Huawei Administration Building IP Department, Guangdong 518129 (CN); WANG, Kefeng, Guangdong 518129 (CN)
(74) Representative: Hengelhaupt, Jürgen
(86) International application number: PCT/CN2007/000812
(87) International publication number: WO 2007/107083

(56) References cited:
- EP-A- 1 134 990
- EP-A1- 1 021 911
- WO-A1-99/31901
- CN-A- 1 314 753
- US-A- 5 502 759
- US-B1- 6 233 325

## Description

### Field of the Invention

The invention relates to the field of communications, and in particular, to a communication system, device and a charging method.

### Background of the Invention

For clarity of the specification, some terms and the abbreviations thereof involved in the specification are given below.
- IN:: Intelligent Network;
- IP:: Intelligent Peripheral;
- MSC/SSP:: Mobile Switching Centre/Service Switching Point;
- SCP:: Service Control Point;
- SSP:: Service Switching Point;
- INAP:: Intelligent Network Application. Protocol:
- CAP:: CAMEL Appl ication Protocol;
- ISUP:: ISDN User Part;
- IDP:: Initial Detect Point;
- ETC:: Establish Temporary Connection;
- ARI:: Assist Request Instruction;
- DFC:: Disconnect Forward Connection;
- PA:: Play Announcement;
- PC:: Prompt And Collect User Information;
- PR:: Prompt And Receive Message;
- SRR:: Specialized Resource Report;
- IAM:: Initial Address Message;
- ACM:: Address Complete Message;
- ANM:: Answer Message;
- ANC:: Answer signal, Charge;
- ANN:: Answer signal No Charging;
- AC:: Applying Charge;
- FCI:: Furnish Charging Information;
- RRBE:: Request report BCSM event.

An intelligent peripheral is an intelligent network peripheral device for providing specialized resources.

In the specifications for wireless intelligent network (WIN) and fixed intelligent network (FIN), when an intelligent service utilizes a specialized resource of an intelligent peripheral, the intelligent peripheral is required to send an answer charging message (e.g. ANC/ANM) to a Mobile Switching Centre/Service Switching Point so as to charge, regardless of the type of the intelligent service.

In actual application, charging by use of the specialized resources of an intelligent peripheral is very complicated. In this case, the charging method can not be a simple charging or not-charging throughout a call process. In some intelligent services, such as a Prepaid Service (PPS) and Virtual Private Mobile Network (VPMN), when playing with a resource of an intelligent peripheral, it is unnecessary to charge a user for this service. However, upon the receipt of an answer charging message, some Mobile Switching Centres/Service Switching Points may transparently transmit the answer charging message to a forward exchange which will charge the user. This may result in an error charging to the user.

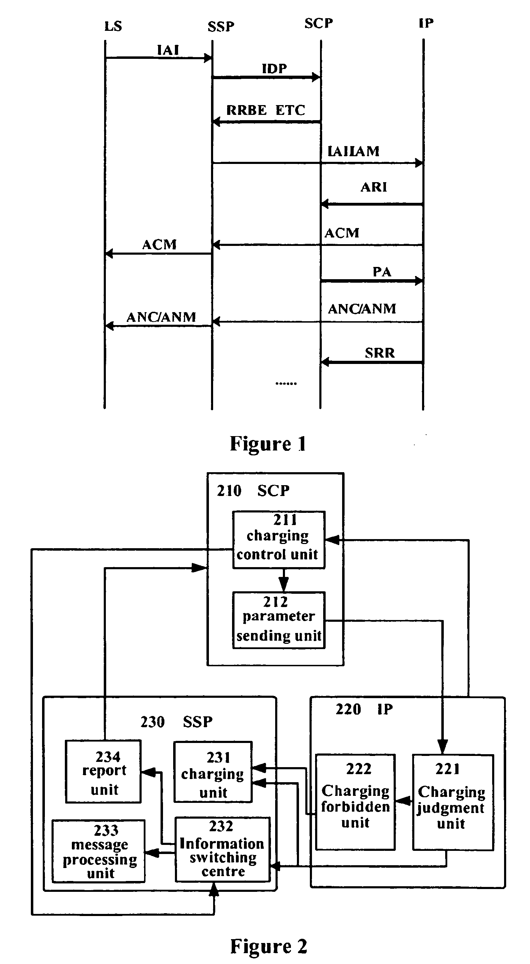

In the existing specifications for intelligent peripherals in the existing intelligent networks, a charging method is applied, in which whenever a resource of an intelligent peripheral is in use, the intelligent peripheral sends an answer charging message to a service switching point. Figure 1 is a flow chart illustrating the charging method, which is as follows.

1) A service switching point receives a call request from a central office, and determines that this is an intelligent network call. Then the service switching point sends an Initial Detect Point (IDP) operation to a service control point. In the IDP operation, the parameters IPAvailable and IPSSPCapability are filled by the service switching point according to whether the service switching point owns a Specialized Resource Function (SRF) and according to the type of the SRF. Other parameters are filled in a way similar to those of other intelligent network calls.

2) When receiving the initial detect point operation, the service control point invokes related service logic, to analyze the parameters IPAvailable and IPSSPCapability sent from the service switching point, and determines that the service needs an external intelligent peripheral. The service control point determines a route address of the external intelligent peripheral to be used according to the requirements of the service and the information of the external intelligent peripheral stored in the service control point. The service control point generates a "related ID" value, and sets the route address of the external intelligent peripheral, the related ID value and SCFID into corresponding parameters in a specified format. Finally, the service control point sends a Request Report BCSM (Service Control Function, BasicCall State Model) Event (RRBE) (Configuration O- discard, O- disconnect) and an Establish Temporary Connection (ETC) operation.

3) When receiving the ETC operation, the service switching point establishes a connection to the external intelligent peripheral. Particularly, the service switching point sends an Initial Address Message / Initial Address with Additional Information (IAM/IAI) operation to the external intelligent peripheral.

4) When receiving the IAM/IAI message, the external intelligent peripheral establishes a path to a specialized resource, and sends an Assist Request Instruction (ARI) operation to the corresponding service control point. In addition, the external intelligent peripheral sends an Address Complete Message (ACM) to the service switching point.

5) When receiving the ACM sent from the external intelligent peripheral, the service switching point forwards the ACM to the central office, to connect a bearer path between a user and the external intelligent peripheral.

6) When receiving the ARI operation, the service control point determines that the external intelligent peripheral is available, and interacts with the external intelligent peripheral.

7) When receiving a first Play Announcement (PA) or a Prompt And Collect User Information (PC) message, the external intelligent peripheral sends an answer charging message to the service switching point. In addition, the external intelligent peripheral provides the required specialized resource to the user.

8) When receiving the answer charging message, the service switching point forwards the answer charging message to the central office.

9) When receiving the ACM or the answer charging message, the central office stops a non-answer timer, and starts charging if charging for the service is required.
EP 134990 A2 discloses a system including an SCP. The SCP uses a prefix associated with the type of service rendered by the Destination Number, and combines the prefix with part or all of the calling party number to form the pseudo CLI, or even a totally new CLI number string, and sends it to the SSP within the calling party number parameter of a "connect" operation. A component of the system such as a special service platform attempting to bill for the call will in the example will not be able to charge to any customer, since the pseudo CLI will not be associated with any customer. The special service platform can identify the service from the purposefully provisioned pseudo CLI, and purposefully avoid double billing.

### Summary of the Invention

Embodiments of the invention are to provide a communication system, device and a charging method, by which the charging may be accurate, so as to prevent error charging at present charging method.

An embodiment of the invention provides a communication system. The communication system includes a service switching point, a service control point and an intelligent peripheral, the service control point is adapted to send an operation characteristic parameter identifying whether to charge for a service to the intelligent peripheral; the intelligent peripheral is adapted to judge whether to request the service switching point to charge for the service according to the operation characteristic parameter identifying whether to charge for the service, and instruct the intelligent peripheral to send an answer no-charging message to the service switching point if a result of the judging is negative.

An embodiment of the invention provides an intelligent peripheral. The intelligent peripheral includes a charging judgment unit adapted to judge whether to request a service switching point to charge for a service according to an operation characteristic parameter identifying whether to charge for the service when receiving the operation characteristic parameter; and a charging forbidden unit adapted to instruct the intelligent peripheral to send an answer no-charging message to the service switching point when a result of the judging is negative.

An embodiment of the invention provides a service control point. The service control point includes a parameter sending unit adapted to send an operation characteristic parameter identifying whether to charge for a service to an intelligent peripheral; and a charging control unit adapted to decide, before sending the operation characteristic parameter identifying whether to charge for the service to the intelligent peripheral or when initiating a call to a called user, whether to send control information indicating to begin or terminate charging to a service switching point according to the operation characteristic parameter identifying whether to charge for the service.

An embodiment of the invention provides a service switching point. The service switching point includes a message processing unit adapted to instruct the service switching point not to forward an answer no-charging message when the service switching point has sent an answer message to a forward central office and has received the answer no-charging message from an intelligent peripheral; and a report unit adapted to instruct the service switching point to report a call duration by using a connection access control instruction and not to charge, when the message processing unit is in work and when the service switching point receives a Disconnect Forward Connection operation.

An embodiment of the invention provides a charging method. The method includes: sending, by a service control point, an operation characteristic parameter identifying whether to charge for a service to an intelligent peripheral; judging, by the intelligent peripheral, whether to request a service switching point to charge for the service according to the operation characteristic parameter identifying whether to charge for the service, wherein the intelligent peripheral sends an answer no-charging message to the service switching point if a result of the judging is negative.

In the embodiments of the invention, the messages related to charging sent to a service switching point is controlled flexibly by an intelligent peripheral, without any modification to the framework of an existing intelligent network. An answer charging message is not sent to service switching point if it is unnecessary to charge for a service, so as to avoid an error charging at present in which an intelligent peripheral sends an answer charging message to a service switching point whenever the intelligent peripheral receives an operation characteristic parameter from a service control point. An accurate charging in an intelligent network is enabled, thereby a variety of intelligent services (such as AD service) may be implemented.

### Brief Description of the Drawings

Figure 1 is a signaling flow chart illustrating charging by use of resources of an intelligent peripheral in an existing intelligent network;

Figure 2 is a schematic diagram illustrating the structure of a communication system using specialized resources of an intelligent peripheral according to a second embodiment of the invention;

Figure 3 is a flow chart illustrating a charging method according to a second method embodiment of the invention;

Figure 4 is a flow chart illustrating a charging method according to a third method embodiment of the invention;

Figure 5 is a flow chart illustrating a charging method according to a fourth method embodiment of the invention;

Figure 6 is a flow chart illustrating a charging method according to a fifth method embodiment of the invention;

Figure 7 is a flow chart illustrating a charging method according to a sixth method embodiment of the invention;

Figure 8 is a flow chart illustrating a charging method according to a seventh method embodiment of the invention;

Figure 9 is a flow chart illustrating a charging method according to an eighth method embodiment of the invention.

### Detailed Description of the Embodiments

In the charging method for signaling processing at present, a service switching point serves as the operation unit for charging. An intelligent peripheral controls the service switching point to charge or not to charge. Upon receipt of a PA (Play Announcement) / PC (Prompt And Collect User Information) message, the intelligent peripheral sends an answer charging message, to the service switching point requesting the service switching point to charge. In this way, a central office will charge a user even if the user does not utilize the resources of the intelligent peripheral, resulting in a loss of the user and a waste of system resources.

Embodiments of the invention provide a charging system and method which enable an accurate and flexible charging, and provide components for implementing the charging system and method, so as to solve the above problems. In particular, when receiving a PA/PG message containing an operation characteristic parameter identifying whether to charge or not, an intelligent peripheral judges whether to send an answer charging message to an information switching centre or a service switching point according to the operation characteristic parameter.

The operation characteristic parameter may be PA or PC signaling. An embodiment is described below illustrating two ways for enabling a PA/PC to identify whether to charge or not.

1) The logic meaning of an existing PA/PC itself is utilized. The existing PA signaling may have three meanings, including charging, no-charging and indefinite, and the PC signaling may have meanings, including charging and no-charging. When receiving a PA/PC, an intelligent peripheral may judge based on the received PA/PC, determine whether to charge for a service, and decide whether to send an answer charging message to an information switching centre or a service switching point.

2) The existing PA/PC signaling may be extended to include a field or code indicating charging or no-charging. In addition, a corresponding parsing software/hardware may be applied to the intelligent peripheral, to judge based on a received PA/PC, determine whether to charge for a service, and decide whether to send an answer charging message to an information switching centre or a service switching point.

In addition, the operation characteristic parameter may be at least one of service type, service voice code or operation order. The operation characteristic parameter is not limited to the above definitions. Any definition of the operation characteristic parameter made by a user may be adopted as long as the intelligent peripheral has the extended parsing capability corresponding to the definition.

For concision of the description, the embodiments described below use the first way for enabling a PA/PC to identify whether to charge. In this case, if the PA/PC message indicates that it is unnecessary for an intelligent peripheral to send an answer charging message to an information switching centre, the intelligent peripheral does not send an answer charging message or an answer no-charging message to the information switching centre, so as to avoid an error charging of the user and a waste of system resources.

Furthermore, based on the above ideas, embodiments of the invention for implementing various services related with intelligent peripherals are further provided, to extend the system functions.

In a first communication system embodiment of the invention, the communication system includes a service switching point, a service control point and an intelligent peripheral. The service control point is adapted to send an operation characteristic parameter identifying whether to charge for a service to the intelligent peripheral. The intelligent peripheral is adapted to judge whether to request the service switching point to charge for the service according to the operation characteristic parameter identifying whether to charge for the service, and if a result of the judgment is negative, the intelligent peripheral does not send an answer charging message to the service switching point.

In a first intelligent peripheral embodiment of the invention, the intelligent peripheral includes a charging judgment unit adapted to judge whether to request a service switching point to charge for a service according to an operation characteristic parameter identifying whether to charge for the service when receiving the operation characteristic parameter; and a charging forbidden unit adapted to instruct the intelligent peripheral not to send an answer charging message to the service switching point when a result of the judgment performed by the charging judgment unit is negative.

In the above two embodiments, the intelligent peripheral is adapted for judging whether to request a service switching point to charge for a service according to an instruction indicating whether to charge for the service sent from a service control point, and not sending an answer charging message to the service switching point when a result of the judgment is negative. In this way, the problem that an intelligent peripheral will send an answer charging message no matter what operation parameter is received at present may be solved, therefore, an accurate charging function may be achieved in an intelligent network.

In a first service control point embodiment of the invention , the service control point includes a parameter sending unit adapted to send an operation characteristic parameter identifying whether to charge for a service to an intelligent peripheral; a charging control unit adapted to decide, before sending the operation characteristic parameter identifying whether to charge for the service to the intelligent peripheral or initiating a call to a called user, whether to send control information indicating to start or terminate charging to a service switching point according to the operation characteristic parameter identifying whether to charge for the service.

In the above embodiment, the service control point transmits the operation characteristic parameter identifying whether to charge for a service to the intelligent peripheral so that the intelligent peripheral may judge whether to request the service switching point to charge. Further, the service control point decides whether to send control information indicating to start or terminate charging to the service switching point so that a flexible charging may be achieved. In this way, the problem that an intelligent peripheral will send an answer charging message no matter what operation parameter is received at present may be solved, therefore, an accurate charging function as well as a flexible charging function may be achieved in an intelligent network.

In first service switching point embodiment of the invention, the service switching point includes a message processing unit adapted to instruct the service switching point not to forward an answer no-charging message when the service switching point has sent an answer message to a forward central office and has received the answer no-charging message from an intelligent peripheral; a report unit adapted to instruct the service switching point to report a call duration by using a connection access control instruction and not to charge, when the message processing unit is in work and when the service switching point receives a Disconnect Forward Connection operation.

In the above embodiment, the service switching point does not forward an answer no-charging message sent from the intelligent peripheral if an answer message has been sent to the forward central office, so as to avoid confusion in the charging-related operation of the forward central office. In addition, responding to a no-charging operation initiated by the intelligent peripheral, the service switching point reports a call duration by using a connection access control instruction and not to charge, so as to achieve an accurate charging in the intelligent network.

In a first charging method embodiment of the invention, the charging method includes the following process. A service control point sends an operation characteristic parameter identifying whether to charge for a service to an intelligent peripheral. The intelligent peripheral judges whether to charge for the service according to the operation characteristic parameter identifying whether to charge for the service. If the judging result is negative, the intelligent peripheral does not send an answer charging message to a service switching point.

In the above embodiment, the intelligent peripheral is able to judge according to a charging-related instruction from the service control point whether to request the service switching point to charge for a service, and will not send an answer charging message to the service switching point if the judging result is negative. Accordingly, the technical problem that an intelligent peripheral sends an answer charging message to a service switching point no matter what operation parameters are received may be solved, so that an accurate charging may be achieved in the intelligent network.

Embodiments of a communication system, an intelligent peripheral, a charging method, a service control point and a service switching point according to the invention will be further described as follows in conjunction with Figures 2-9.

As shown in Figure 2, in a second communication system embodiment of the invention, the communication system includes a service switching point 230, a service control point 210 and an intelligent peripheral 220. The service switching point 230 includes an information switching centre 232, a charging unit 231, a message processing unit 233 and a report unit 234. The service control point 210 includes a parameter sending unit 212 and a charging control unit 211. The intelligent peripheral 220 includes a charging judgment unit 221 and a charging forbidden unit 222.

The parameter sending unit 212 of the service control point 210 is adapted to send an operation characteristic parameter identifying whether to charge for a service to the intelligent peripheral 220. The charging control unit 211 is adapted to decide whether to send control information to the service switching point 230 requesting the service switching point 230 to start or terminate charging, according to the operation characteristic parameter identifying whether to charge for the service, before sending the operation characteristic parameter to the intelligent peripheral 210 or when initiating a call to a called user. Particularly, the charging control unit 211 sends an information instruction requesting to start or terminate charging to the information switching centre 232 of the service switching point 230. Furthermore, if the operation characteristic parameter identifies charging for the service, the charging control unit 211 is adapted to instruct the parameter sending unit 212 to send the operation characteristic parameter identifying charging for the service to the intelligent peripheral 220, thereby the intelligent peripheral 220 sends an answer charging message to the service switching point 230.

The operation characteristic parameter may be at least one of a service type, a service and voice coding or an operation order. If the service coding indicates charging, and the voice coding is not the speech before answer, the charging control unit 211 sends charging control information to the service switching point 230. The charging control information is Applying Charge (AC) or Furnish Charging Information (FCI).

The intelligent peripheral 220 may be an intelligent peripheral, or a physical entity having the functions of an intelligent peripheral, in a fixed or mobile intelligent network. The charging judgment unit 221 is adapted to judge whether to request the service switching point 230 to charge for a service or not, according to an operation characteristic parameter identifying whether to charge for the service, so as to decide whether to send an answer charging message (ANM/ANC) or an answer no-charging message to the information switching centre 232 of the service switching point 230. If the judging result is negative, the charging forbidden unit 222 instructs the intelligent peripheral 220 not to send an answer charging message to the service switching point 230. For example, the charging forbidden unit 222 may instruct the intelligent peripheral 220 to directly send to the service switching point 230 a Play Announcement (PA), instead of an answer charging message. For another example, the charging forbidden unit 222 may instruct the intelligent peripheral 220 to send an answer no-charging message to the service switching point 230.

The operation characteristic parameter may be a service and voice coding including a service coding which identifies whether to charge, and a voice coding identifying whether it is the speech before answer. If the service coding indicates no charging, and the voice coding is the speech before answer, the charging judgment unit 221 reaches a negative judging result.

The charging unit 231 in the service switching unit 230 is adapted to charge when receiving an answer charging message from the intelligent peripheral 220, stop charging and report a charging report when receiving a service termination instruction sent from the service control point 210. The service termination instruction may be a Disconnect Forward Connection (DFC) message. The message processing unit 233 is adapted to instruct the service switching point 230 not to forward an answer no-charging message when receiving the answer no-charging message from the intelligent peripheral 220 while the service switching point 230 has send an answer message to the forward central office. The report unit 234 is adapted to instruct the service switching point 230 reports a call duration by using a connection access control instruction to be reported to the service control point 210 and not to charge when the service switching point 230 receives a DFC message from the service control point 210.

In the system as shown in Figure 2, operation characteristics are identified on the intelligent peripheral 220. In this way, an accurate charging by using the intelligent peripheral 220 may be enabled without any modification to the operation flows of the central office.

In the above embodiment, not only an accurate charging may be achieved by using the charging judgment unit 221 in the intelligent peripheral 220, but also a flexible charging may be enabled by using the charging control unit 211 in the service control unit 210, the charging unit 231/the report unit 234 in the service switching point 230, and the charging judgment unit 221 in the intelligent peripheral 220, i.e. by signaling cooperation of a service flow control of the charging control unit 211 in the service control point 210 with the service switching point 230 and the intelligent peripheral 220.

The operation flow of a method according to an embodiment of the invention is described as follows in conjunction with the above communication system.

For conciseness of the description, the whole process of a call is divided into two stages:
1) a specialized resource utilizing stage, and 2) a call connection stage (in which a specialized resource is not utilized). With the method, the charging by using the intelligent peripheral 220 is achieved without any modification to the central office, and the intelligent network specifications are improved.

The charging method embodiments of the invention include, but not limited to, the following:

1) supporting the speech before answer, i.e. playing before answering, and no charging for the playing;

2) no charging for utilization of a special resource of an intelligent peripheral, in which the special resource is utilized without call connection;

3) charging for utilization of a special resource of an intelligent peripheral, in which the special resource is utilized without call connection

4) no charging for utilization of a special resource of an intelligent peripheral, and no charging for call connection;

5) no charging for utilization of a special resource of an intelligent peripheral, while charging for call connection;

6) charging for utilization of a special resource of an intelligent peripheral, while no charging for call connection;

7) charging for utilization of a special resource of an intelligent peripheral, and charging for call connection.

The above charging method embodiments are described below in detail.

Second charging method embodiment of the invention

This method embodiment supports the speech before answer, i.e. playing before answering, and no charging for the playing.

In this embodiment, the intelligent peripheral 220 supports the speech before answer, i.e. a function of playing voice before the intelligent peripheral 220 sends an answer charging message to the service switching point 230

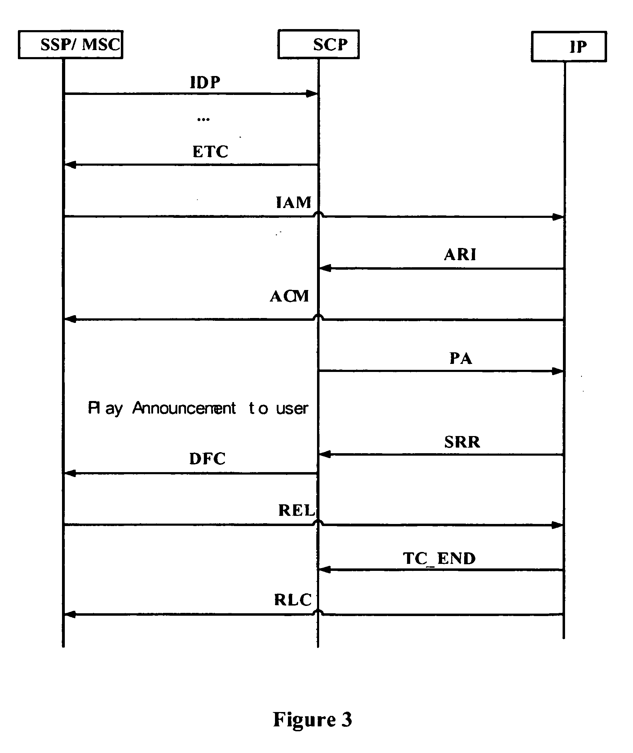

Figure 3 illustrates a signaling flow between function entities of the communication system. The signaling flow is as follows.

A1) The information switching centre 232 in the service switching point 230 reports an Initial Detect Point (IDP) operation, to trigger an intelligent service on the service control point 210.

A2) The service control point 210, under the control of the signaling flow, delivers an Establish Temporary Connection (ETC) request to the information switching centre 232 in the service switching point 230, to establish a forward connection with the intelligent peripheral 220. When receiving the ETC request, the service switching point 230 establishes a timeslot connection between user side and source side according to the value of bothwaythroughconnectionind.

A3) The service switching point 230 sends to the intelligent peripheral 220 a call establishing message, e.g. an Initial Address Message (IAM).

A4) When receiving the call establishing message sent from the information switching centre 232 in the service switching point 230, the intelligent peripheral 220 sends an Assist Request Instruction (ARI) message to the service control point 210, and waits for an instruction of the service control point 210.

A5) When the charging control unit 211 in the service control point 210 receives the API message, the parameter sending unit 212 sends an operation characteristic parameter identifying whether to charge for the service to the intelligent peripheral 220, for example, a Play Announcement (PA) in the embodiment instructing the intelligent peripheral 220 to play for the user.

A6) When receiving the PA, the charging judgment unit 221 in the intelligent peripheral 220 judges whether to request the service switching point 230 to charge for the service according to the operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA which pertains to the service of speech before answer and has a meaning of indefinite or no charging. If the judging result is negative, the service is not charged, the charging forbidden unit 222 instructs the intelligent peripheral 220 to directly send a PA, instead of an answer message (i.e. ANM/ANC/ANN), to the charging unit 231 in the service switching point 230. Alternatively, the charging forbidden unit 222 instructs the intelligent peripheral 220 to directly send an answer no-charging message to the charging unit 231.

The service control point 210 may optionally transmit the PA a plurality of times according to the requirements of the service.

A7) When the PA is transmitted, the service control point 210 delivers a Disconnect Forward Connection (DFC) message to the information switching centre 232 in the service switching point 230 according to the service, to disconnect the connection to the resource of the intelligent peripheral 220.

The process of A7) is as follows:

A71) When the PA is transmitted, the intelligent peripheral 220 sends a resource report message to the service control point 210.

A72) The service control point 210 delivers a DFC message to the information switching centre 232 in the service switching point 230 according to the service, requesting to disconnect the connection to the resource of the intelligent peripheral 220.

A73) The service switching point 230 initiates a Release (REL) message to the intelligent peripheral 220, to disconnect the connection to the resource of the intelligent peripheral 220.

A74) The intelligent peripheral 220 sends a message, e.g. a TC-END message, to the service control point 210, so as to terminate the current session with the service control point 210.

A75) The intelligent peripheral 220 sends a Release Complete (RLC) message to the service switching point 230, notifying the service switching point 230 that the current temporal connection has been released.

Third charging method embodiment of the invention

In this method embodiment, a specialized resource of an intelligent peripheral is utilized without charging, i.e. a situation of utilization of the specialized resource of the intelligent peripheral, without a call connection phase.

In this embodiment, the charging control unit 211 in the service control point 210 controls the intelligent peripheral 220, and sends an answer no-charging message to the intelligent peripheral 220 when the specialized resource is utilized. The charging judgment unit 221 in the intelligent peripheral 220 judges whether to send an answer no-charging message to the charging unit 231 in the service switching point 230, according to the type of a service delivered by the service control point 210.

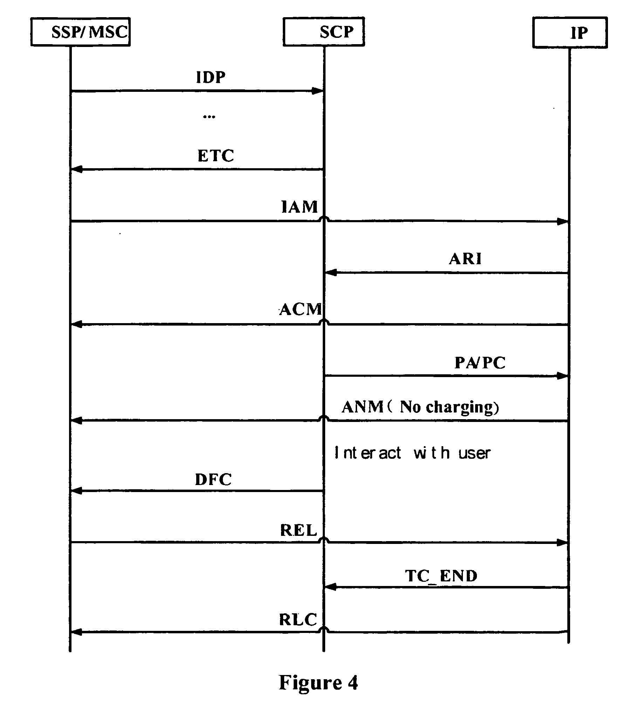

Figure 4 illustrates a signaling flow between function entities of the communication system. The signaling flow is as follows.

B1) The information switching centre 232 in the service switching point 230 reports an Initial Detect Point (IDP) operation, to trigger an intelligent service on the service control point 210.

B2) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter bothwaythroughconnectionind.

B3) The service switching point 230 sends to the intelligent peripheral 220 a call establishing message, e.g. an Initial Address Message (IAM).

B4) When receiving the call establishing message sent from the information switching centre 232 in the service switching point 230, the intelligent peripheral 220 sends an Assist Request Instruction (ARI) message to the service control point 210, and waits for an instruction of the service control point 210.

B5) When receiving the ARI message, the charging control unit 211 in the service control point 210 sends to the intelligent peripheral 220 a Play Announcement / Prompt And Collect User Information (PA/PC), instructing the intelligent peripheral 220 to play for the user, or to play for the user and collect user information.

B6) When receiving the PA/PC, the charging judgment unit 221 in the intelligent peripheral 220 judges whether to request the service switching point 230 to charge for the service according to an operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA/PC which has a meaning of no charging. Accordingly, the judging result is no charging for the service, the charging forbidden unit 222 instructs the intelligent peripheral 220 to send an answer no-charging message to the charging unit 231 in the service switching point 230.

Alternatively, the charging judgment unit 221 may judges according to the service coding in the operation characteristic parameter, to send an answer no-charging message to the charging unit 231 in the service switching point 230 of the forward central office.

If the Telephone User Part (TUP) signaling is employed, the charging judgment unit 221 in the intelligent peripheral 220 sends the answer no-charging message (i.e. ANN) to the information switching centre 232 in the service switching point 230 of the forward central office.

87) When receiving the answer no-charging message from the charging judgment unit 221 in the intelligent peripheral 220, the charging unit 231 in the service switching point 230 forwards the answer no-charging message to the forward central office. However, if an answer message has been sent by the charging unit 231 in the service switching point 230 to the forward central office, the answer no-charging message will not be forwarded.

In this case, the charging unit 231 in the service switching point 230 does not generate a charging list for utilizing the resource of the intelligent peripheral 220. If the charging control unit 211 in the service control point 210 has sent an applying charge (AC) instruction before the Establish Temporal Connection (ETC) operation, the information switching centre 232 in the service switching point 230 reports the call duration, by using a connection access control (AC) instruction, to the service control point 210 through the report unit 234 without charging, when the information switching centre 232 receives a Disconnect Forward Connection (DFC) operation from the service control point 210.

B8) When the user has finished its interaction with the system, the service control point 210 delivers a Disconnect Forward Connection (DFC) operation to the information switching centre 232 in the service switching point 230 according to the service, to disconnect the connection to the resource of the intelligent peripheral 220.

The process of 88) is as follows:

B81) When the user has finished its interaction with the system, the intelligent peripheral 220 sends a resource report message to the service control point 210.

B82) The service control point 210 delivers a DFC message to the information switching centre 232 in the service switching point 230 according to the service, to disconnect the connection to the resource of the intelligent peripheral 220.

B83) The service switching point 230 sends a Release (REL) message to the intelligent peripheral 220, to disconnect the connection to the resource of the intelligent peripheral 220.

B84) The intelligent peripheral 220 sends a session ending message, e.g. a TC-END message, to the service control point 210, so as to terminate the current session with the service control point 210.

B85) The intelligent peripheral 220 sends a Release Complete (RLC) message to the service switching point 230, notifying the service switching point 230 that the current temporal connection has been released.

Fourth charging method embodiment of the invention

In this method embodiment, a user is charged for utilizing a specialized resource of an intelligent peripheral, i.e. a situation of utilization of the specialized resource of the intelligent peripheral, without a call connection phase.

In this embodiment, the charging control unit 211 in the service control point 210 controls the intelligent peripheral 220 to send an answer charging message to the service switching point 230 when a specialized resource is utilized.

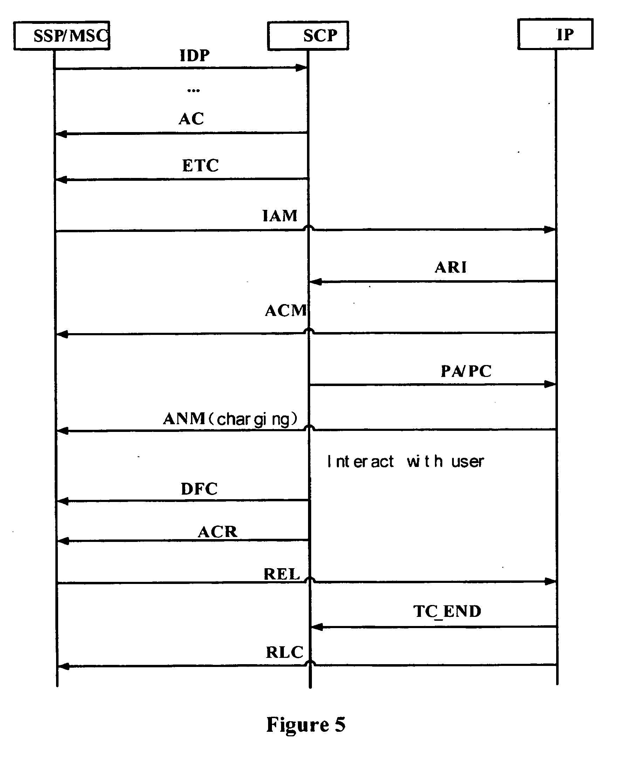

Figure 5 illustrates a signaling flow between function entities of the communication system. The signaling flow is as follows.

C1) The information switching centre 232 in the service switching point 230 reports an Initial Detect Point (IDP) operation, to trigger an intelligent service on the service control point 210.

C2) The service control point 210 sends a charging request Access Control (AC) instruction to the information switching centre 232 in the service switching point 230, requesting the information switching centre 232 in the service switching point 230 to charge.

C3) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter bothwaythroughconnectionind.

C4) The service switching point 230 sends to the intelligent peripheral 220 a call establishing message, e.g. an Initial Address Message (IAM).

C5) When receiving the call establishing message sent from the information switching centre 232 in the service switching point 230, the intelligent peripheral 220 sends an Assist Request Instruction (ARI) message to the service control point 210, and waits for an instruction of the service control point 210.

C6) When receiving the ARI message, the charging control unit 211 in the service control point 210 sends to the intelligent peripheral 220 a Play Announcement / Prompt And Collect User Information (PA/PC), instructing the intelligent peripheral 220 to play for the user, or to play for the user and collect user information.

C7) When receiving the PA/PC, the charging judgment unit 221 in the intelligent peripheral 220 judges whether to request the service switching point 230 to charge for the service according to an operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA/PC which has a meaning of charging. Accordingly, the judging result is "yes"(the service is to be charged), an answer charging message, e.g. ANM/ANC, is sent to the information switching centre 232 in the service switching point 230.

The charging unit 231 of the service switching point 230 begins charging when receiving the answer charging message from the intelligent peripheral 220.

C8) When receiving the answer charging message from the charging judgment unit 221 in the intelligent peripheral 220, the charging unit 231 in the service switching point 230 forwards the answer charging message to the forward central office. However, if an answer message has been sent to the forward central office by the information switching centre 232 in the service switching point 230, the answer charging message will not be forwarded.

C9) When the user has finished its interaction with the system, the service control point 210 delivers a Disconnect Forward Connection (DFC) message to the information switching centre 232 in the service switching point 230 according to the service, to disconnect the connection to the resource of the intelligent peripheral 220.

The process of C9) is as follows:

C91) When the user has finished its interaction with the system, the intelligent peripheral 220 sends a resource report message to the service control point 210.

C92) The service control point 210 delivers a DFC message to the information switching centre 232 in the service switching point 230 according to the service, to disconnect the connection to the resource of the intelligent peripheral 220.

C93) The service switching point 230 sends a Release (REL) message to the intelligent peripheral 220, to disconnect the connection to the resource of the intelligent peripheral 220.

C94) The intelligent peripheral 220 sends a session ending message, e.g. a TC-END message, to the service control point 210, so as to terminate the current session with the service control point 210.

C95) The intelligent peripheral 220 sends a Release Complete (RLC) message to the service switching point 230, notifying the service switching point 230 that the current temporal connection has been released.

C10) When receiving the DFC message, the information switching centre 232 in the service switching point 230 sends a charging request report to the service control point, so as to charge.

C11) In the situation that the service control point 210 disconnects initiatively, when receiving a DFC message from the service control point 210, the charging unit 231 of the service switching point 230 stops charging and reports a charging report. Or when receiving a DFC message from the intelligent peripheral 220, the charging unit 231 stops charging and reports charging information to the service control point 210.

In this embodiment, the service control point 210 delivers a charging request Access Control (AC) instruction to the service switching point 230 in the process of C2, and an answer charging message is sent to the service switching point 230 in the process of C7. In this way, the charging function is achieved.

Fifth charging method embodiment of the invention

In this method embodiment, a specialized resource of an intelligent peripheral is utilized without charging, the call connection phase is not charged either.

In this embodiment, a user is required, during a call, not only to use a specialized resource of an intelligent peripheral for interaction, but also to connect to a called user. Both the call and the utilization of the specialized resource are not charged. No matter whether the specialized resource is utilized first or the call is connected first during the call, the charging judgment unit 221 in the intelligent peripheral 220 sends an answer message ANM (no charging) or an answer signal no charging (ANN) to the charging unit 231 in the service switching point 230, and the information switching centre 232 in the service switching point 230 forwards the ANM or the ANN to the forward central office.

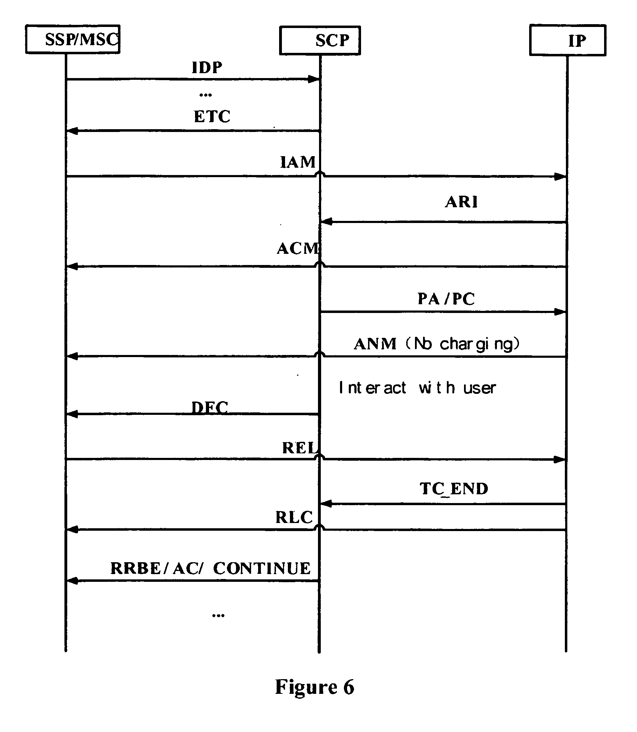

Figure 6 illustrates a signaling flow between function entities of the communication system. The signaling flow is as follows.

D1) The information switching centre 232 in the service switching point 230 reports an Initial Detect Point (IDP) operation, to trigger an intelligent service on the service control point 210.

D2) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter bothwaythroughconnectionind.

D3) The service switching point 230 sends to the intelligent peripheral 220 a call establishing message, e.g. an Initial Address Message (IAM).

D4) When receiving the call establishing message sent from the information switching centre 232 in the service switching point 230, the intelligent peripheral 220 sends an Assist Request Instruction (ARI) message to the service control point 210, and waits for an instruction of the service control point 210.

D5) When the charging control unit 211 in the service control point 210 receives the ARI message, the parameter sending unit 212 sends an operation characteristic parameter identifying whether to charge for the service to the intelligent peripheral 220, for example, a Play Announcement / Prompt And Collect User Information (PA/PC) in this embodiment, instructing the intelligent peripheral 220 to play for the user, or to play for the user and collect user information.

D6) When receiving the PA/PC, the charging judgment unit 221 in the intelligent peripheral 220 judges whether to request the service switching point 230 to charge for the service according to the operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA/PC which has a meaning of no charging. Accordingly, the judging result is that the service is not to be charged for utilization of the specialized resource, the charging forbidden unit 222 instructs the intelligent peripheral 220 to send an answer no-charging message to the information switching centre 232 in the service switching point 230.

D7) When receiving the answer no-charging message, the charging unit 231 in the service switching point 230 forwards the answer no-charging message to the forward central office. However, if an answer message has been sent to the forward central office by the information switching centre 232 in the service switching point 230, the answer no-charging message will not be forwarded.

D8) When the user has finished its interaction with the system, the service control point 210 delivers a Disconnect Forward Connection (DFC) message to the information switching centre 232 in the service switching point 230 according to the service, to disconnect the connection to the resource of the intelligent peripheral 220.

The process of D8) is as follows:

D81) When the user has finished its interaction with the system, the intelligent peripheral 220 sends a resource report message to the service control point 210.

D82) The service control point 210 delivers a DFC message to the information switching centre 232 in the service switching point 230 according to the service, to disconnect the connection to the resource of the intelligent peripheral 220.

D83) The service switching point 230 sends a Release (REL) message to the intelligent peripheral 220, to disconnect the connection to the resource of the intelligent peripheral 220.

D84) The intelligent peripheral 220 sends a session ending message, e.g. a TC-END message, to the service control point 210, so as to terminate the current session with the service control point 210.

D85) The intelligent peripheral 220 sends a Release Complete (RLC) message to the service switching point 230, notifying the service switching point 230 that the current temporal connection has been released.

D9) The service control point 210, under the control of the signaling flow, sends a Request report BCSM event/Access Control/Continue (RRBE/AC/CONTINUE) to the information switching centre 232 in the service switching point 230, to initiate a call to the called user. When receiving an answer message from a called office, the service switching point 230 does not forward the answer message to the forward central office.

Sixth charging method embodiment of the invention

In this method embodiment, a user is not charged for utilizing a specialized resource of an intelligent peripheral, while being charged in a call connection phase.

In this embodiment, the user is required, during a call, not only to use a specialized resource of an intelligent peripheral for interaction, but also to connect to a called user. The user is not charged for utilizing the specialized resource of the intelligent peripheral, but is charged in the call connection phase

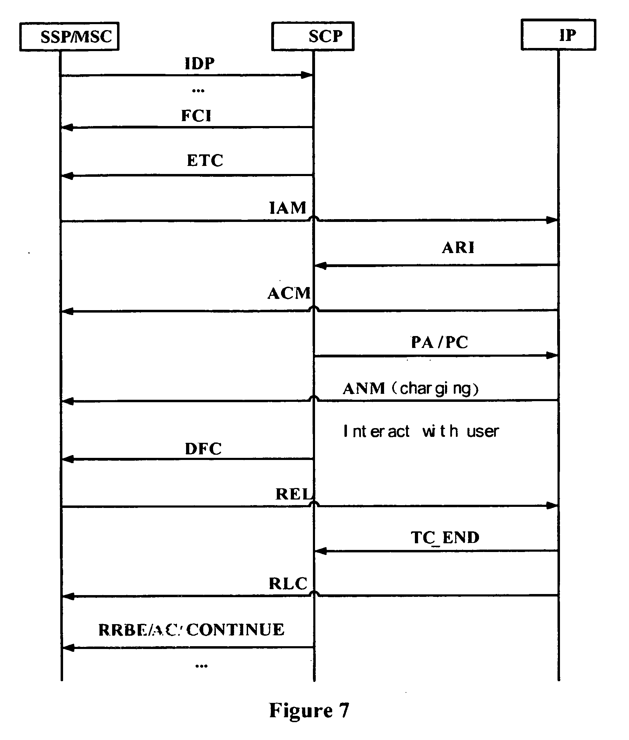

Figure 7 illustrates a signaling flow between function entities of the communication system. The signaling flow is as follows.

E1) The information switching centre 232 in the service switching point 230 reports an Initial Detect Point (IDP) operation, to trigger an intelligent service on the service control point 210.

E2) A charging call centre in the service control point 210, under the control of the signaling flow, sends a Furnish Charging Information (FCI) instruction to the information switching centre 232 in the service switching point 230, requesting the information switching centre 231 in the service switching point 230 to charge.

During the call, because the user is not charged for utilizing the specialized resource of the intelligent peripheral but is charged in the subsequent call connection, the service control point 210 is required to deliver a FCI instruction before delivering an Establish Temporary Connection (ETC) message. The service switching point 230 of a mobile switching centre inserts information specified by the FCI instruction into a caller call list. The charging unit 231 in the service switching point 230 utilizes the information as the basis for deleting items from the caller call list. In addition, when the service control point 210 instructs the intelligent peripheral 220 to interact with the user, the intelligent peripheral 220 is required to send an answer charging message, e.g. ANM/ANC, to the information switching centre 232 in the service switching point 230 when the intelligent peripheral 220 receives a first operation, e.g. a PA/PC, from the service control point 210.

For a call within a mobile network, the call lists need to be sorted: the call lists for utilizing resources are chosen because the user is not be charged for utilizing the resources during this type of call. In addition, the information specified by the FCI instruction is inserted into the caller call list of the call, which is used by the charging unit 231 as the basis for deleting items from the call list. A caller outside the mobile network is charged for the call connection and the utilization of resources.

The FCI parameters are as follows:

```
FurnishChargingInformationArg ::= FCIBillingChargingCharacteristics
      CAMEL-FCIBillingChargingCharacteristics ::= CHOICE {
      fCIBCCCAMELsequencel [0] SEQUENCE {
      freeFormatData [0] OCTET STRING (SIZE (minFCIBillingChargingDataLength..
      maxFCIBillingchargingDataLength)),
      partyToCharge [1] SendingSideID DEFAULT legl
      }
      }
      minFCIBillingChargingDataLength INTEGER ::= 1
      maxFCIBillingChargingDataLength INTEGER ::= 40
      CAMEL-freeFormatData ::= IMPLICT SEQUENCE {
             ChargeMode [0] OCTET STRING (SIZE(1)), OPTIONAL
             (0: delete the call list; others: to be defined ...)
      }
```

E3) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter bothwaythroughconnectionind.

E4) The service switching point 230 sends to the intelligent peripheral 220 a call establishing message, e.g. an Initial Address Message (IAM).

E5) When receiving the call establishing message sent from the information switching centre 232 in the service switching point 230, the intelligent peripheral 220 sends an Assist Request Instruction (ARI) message to the service control point 210, and waits for an instruction of the service control point 210.

E6) When receiving the ARI message, the charging control unit 211 in the service control point 210 sends to the intelligent peripheral 220 a Play Announcement / Prompt And Collect User Information (PA/PC), instructing the intelligent peripheral 220 to play for the user, or to play for the user and collect user information.

E7) When receiving the PA/PC, the charging judgment unit 221 in the intelligent peripheral 220 judges whether to request the service switching point 230 to charge for the service according to an operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA/PC which has a meaning of charging. Accordingly, the judging result is "yes"(the service is to be charged), an answer charging message, e.g. ANM/ANC, is sent to the information switching centre 232 in the service switching point 230.

E8) When receiving the answer charging message from the charging judgment unit 221 in the intelligent peripheral 220, the charging unit 231 in the service switching point 230 begins charging, and forwards the answer charging message to the forward central office. However, if an answer message has been sent to the forward central office by the service switching point of Mobile Switching Centre (SSP/MSC), the answer charging message will not be forwarded.

E9) When the user has finished its interaction with the system, the service control point 210 delivers a Disconnect Forward Connection (DFC) message to the information switching centre 232 in the service switching point 230 according to the service, to disconnect the connection to the resource of the intelligent peripheral 220.

The process of E9) is as follows:

E91) When the user has finished its interaction with the system, the intelligent peripheral 220 sends a resource report message to the service control point 210.

E92) The service control point 210 delivers a DFC message to the information switching centre 232 in the service switching point 230, to disconnect the connection to the resource of the intelligent peripheral 220.

E93) The service switching point 230 sends a Release (REL) message to the intelligent peripheral 220, to disconnect the connection to the resource of the intelligent peripheral 220.

E94) The intelligent peripheral 220 sends a session ending message, e.g. a TC-END message, to the service control point 210, so as to terminate the current session with the service control point 210.

E95) The intelligent peripheral 220 sends a Release Complete (RLC) message to the service switching point 230, notifying the service switching point 230 that the current temporal connection has been released.

E10) When receiving the DFC message, the charging unit 231 in the service switching point 230 stops charging, and a charging record is generated at the information switching centre 232 in the service switching point 230.

When receiving the DFC message from the service control point 210, or when the intelligent peripheral 220 disconnects initiatively, the information switching centre 232 in the service switching point 230 stops charging, and generates a charging record.

E11) The service control point 210, under the control of the signaling flow, sends a Request report BCSM event/Access Control/Continue (RRBE/AC/CONTINUE) to the information switching centre 232 in the service switching point 230, to initiate a call to the called user. When receiving an answer message from a called office, the service switching point 230 does not forward the answer message to the forward central office.

In this embodiment, the service control point 210 delivers a FCI instruction to the service switching point 230 in the process of E2, and an answer charging message is sent to the service switching point 230 in the process of E7. In this way, the charging function for the call connection phase is achieved.

Seventh charging method embodiment of the invention

In this method embodiment, a user is charged for utilizing a specialized resource of an intelligent peripheral, while not being charged in a call connection phase.

In this embodiment, the user is required, during a call, not only to use a specialized resource of an intelligent peripheral for interaction, but also to connect to a called user. The user is charged for utilizing the specialized resource of the intelligent peripheral, but is not charged in the call connection phase

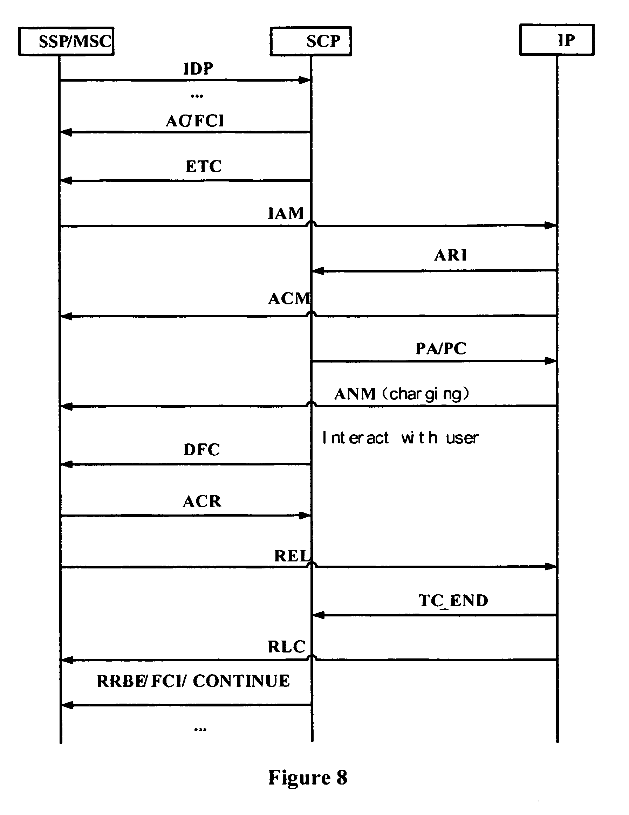

Figure 8 illustrates a signaling flow between function entities of the communication system. The signaling flow is as follows.

F1) The information switching centre 232 in the service switching point 230 reports an Initial Detect Point (IDP) operation, to trigger an intelligent service on the service control point 210.

F2) The charging control unti 211 in the service control point 210 sends a charging request or a Furnish Charging Information (FCI) instruction to the information switching centre 232 in the service switching point 230, requesting the charging unit 231 in the service switching point 230 to charge.

During the call, because the user is charged for utilizing the specialized resource of the intelligent peripheral but is not charged in the subsequent call connection, the service control point 210 is required to deliver a FCI instruction before delivering an Establish Temporary Connection (ETC) message. The service switching point 230 of a mobile switching centre inserts information specified by the FCI instruction into a caller call list. The charging unit 231 utilizes the information as the basis for deleting items from the caller call list.

For a call within a mobile network, the call lists need to be sorted: the call lists for call connection are chosen because the user is not charged for call connection while being charged for utilizing the resources during this type of call (e.g. a service in which a user listens to advertisement and is offered call fees). A caller outside the mobile network is charged for the call connection and the utilization of resources.

The FCI parameters are as follows:

```
      FurnishChargingInformationArg ::= FCIBillingChargingCharacteristics
      CAMEL-FCIBillingChargingCharacteristics ::= CHOICE {
      fCIBCCCAMELsequence1 [0] SEQUENCE {
      freeFormatData [0] OCTET STRING (SIZE (minFCIBillingChargingDataLength..
      maxFCIBillingChargingDataLength)),
      partyToCharge [1] SendingSideID DEFAULT leg1
      }
      }
      minFCIBillingChargingDataLength INTEGER ::= 1
      maxFCIBillingChargingDataLength INTEGER ::= 40
      CAMEL-freeFormatData::= IMPLICT SEQUENCE {
             ChargeMode [0] OCTET STRING (SIZE(1)), OPTIONAL
             (0: delete the call list; others: to be defined...)
      }
```

F3) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter bothwaythroughconnectionind.

F4) The service switching point 230 sends to the intelligent peripheral 220 a call establishing message, e.g. an Initial Address Message (IAM).

F5) When receiving the call establishing message sent from the information switching centre 232 in the service switching point 230, the intelligent peripheral 220 sends an Assist Request Instruction (ARI) message to the service control point 210, and waits for an instruction of the service control point 210.

F6) When receiving the ARI message, the charging control unit 211 in the service control point 210 sends to the intelligent peripheral 220 a Play Announcement / Prompt And Collect User Information (PA/PC), instructing the intelligent peripheral 220 to play for the user, or to play for the user and collect user information.

F7) When receiving the PA/PC, the charging judgment unit 221 in the intelligent peripheral 220 judges whether to request the service switching point 230 to charge for the service according to an operation characteristic parameter identifying whether to charge for the service, to further judges whether to send an answer charging message, or which answer message to be sent, to the information switching centre 232 in the service switching point 230 of the forward central office. In this embodiment, the operation characteristic parameter is a PA/PC which has a meaning of charging. Accordingly, the judging result is "yes"(the service is to be charged for utilization of resources), an answer charging message, e.g. ANM/ANC, is sent to the information switching centre 232 in the service switching point 230.

F8) When receiving the answer charging message from the charging judgment unit 221 in the intelligent peripheral 220, the charging unit 231 in the service switching point 230 begins charging, and forwards the answer charging message to the forward central office. However, if an answer message has been sent to the forward central office by the information switching centre 232 in the service switching point 230, the answer charging message will not be forwarded.

F9) When the user has finished its interaction with the system, the service control point 210 delivers a Disconnect Forward Connection (DFC) message to the information switching centre 232 in the service switching point 230 according to the service, to disconnect the connection to the resource of the intelligent peripheral 220.

The process of F9) is as follows:

F91) When the announcement playing is finished, the intelligent peripheral 220 sends a resource report message to the service control point 210.

F92) The service control point 210 delivers a DFC message to the information switching centre 232 in the service switching point 230 according to the service, to disconnect the connection to the resource of the intelligent peripheral 220.

F93) The service switching point 230 sends a Release (REL) message to the intelligent peripheral 220, to disconnect the connection to the resource of the intelligent peripheral 220.

F94) The intelligent peripheral 220 sends a session ending message, e.g. a TC-END message, to the service control point 210, so as to terminate the current session with the service control point 210.

F95) The intelligent peripheral 220 sends a Release Complete (RLC) message to the service switching point 230, notifying the service switching point 230 that the current temporal connection has been released.

F10) When receiving the DFC message and stopping charging, the information switching centre 232 in the service switching point 230 reports a charging report to the service control unit 210, or generates a charging record in the case of the FCI instruction.

When receiving a disconnection message from the calling or called user, the information switching centre 232 in the service switching point 230 generates a charging record.

F11) The service control point 210, under the control of the signaling flow, sends a Request report BCSM event/Access Control/Continue (RRBE/AC/CONTINUE) to the information switching centre 232 in the service switching point 230, to initiate a call to the called user. When receiving an answer message from a called office, the service switching point 230 does not forward the answer message to the forward central office.

In this embodiment, the service control point 210 delivers a FCI instruction to the service switching point 230 in the process of F2, and an answer charging message is sent to the service switching point 230 in the process of F7. In this way, the charging function for utilizing the specialized resource of the intelligent peripheral is achieved.

Eighth charging method embodiment of the invention

In this method embodiment, a user is charged not only for utilization of a specialized resource of an intelligent peripheral but also in a call connection phase.

In this embodiment, the user is required, during a call, not only to use a specialized resource of an intelligent peripheral for interaction, but also to connect to a called user. The user is charged for utilizing the specialized resource of the intelligent peripheral, as well as in the call connection phase

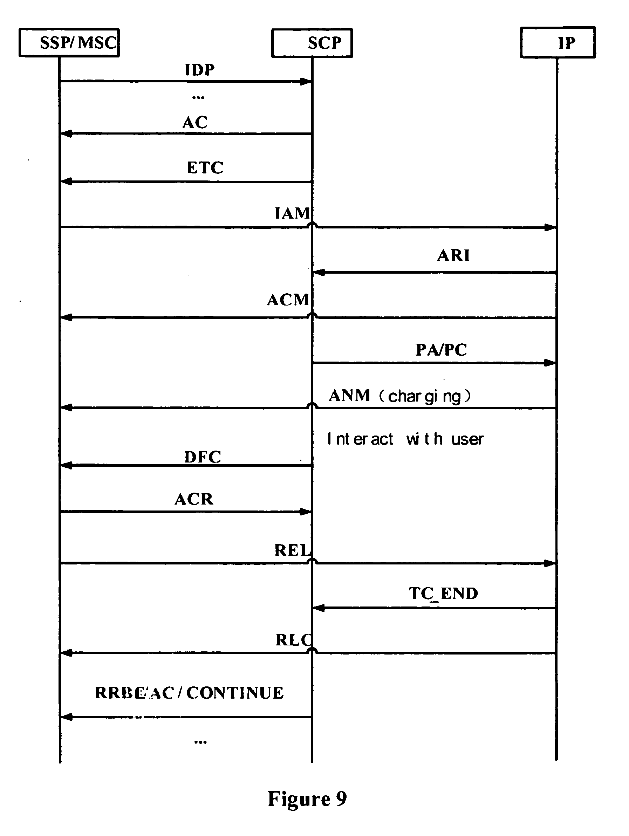

Figure 9 illustrates a signaling flow between function entities of the communication system. The signaling flow is as follows.

H1) The information switching centre 232 in the service switching point 230 reports an Initial Detect Point (IDP) operation, to trigger an intelligent service on the service control point 210.

H2) The charging control unit 211 in the service control point 210 sends a charging request Access Control (AC) operation to the information switching centre 232 in the service switching point 230 according to service flow, requesting the information switching centre 232 in the service switching point 230 to charge.

H3) The service control point 210, under the control of the signaling flow, delivers an Establish Temporary Connection (ETC) message to the information switching centre 232 in the service switching point 230, to establish a forward connection with the intelligent peripheral 220. When receiving the ETC message, the service switching point 230 establishes a timeslot connection between user side and source side according to the value of a parameter both way through connectionind.

H4) The service switching point 230 sends to the intelligent peripheral 220 a call establishing message, e.g. an Initial Address Message (IAM).

H5) When receiving the call establishing message sent from the information switching centre 232 in the service switching point 230, the intelligent peripheral 220 sends an Assist Request Instruction (ARI) message to the service control point 210, and waits for an instruction of the service control point 210.

H6) When the charging control unit 211 in the service control point 210 receives the ARI message, the parameter sending unit 212 in the service control point 210 sends to the intelligent peripheral 220 an operation characteristic parameter identifying whether ot charge for the service, e.g. a Play Announcement / Prompt And Collect User Information (PA/PC) in this embodiment, instructing the intelligent peripheral 220 to play for the user, or to play for the user and collect user information.

H7) When receiving the PA/PC, the charging judgment unit 221 in the intelligent peripheral 220 judges whether to request the service switching point 230 to charge for the service according to the operation characteristic parameter, to further judges whether to send an answer charging message, or which answer message to be sent, to the information switching centre 232 in the service switching point 230 of the forward central office. In this embodiment, the operation characteristic parameter is a PA/PC which has a meaning of charging. Accordingly, the judging result is that the service is to be charged for utilization of resources, an answer charging message, e.g. ANM/ANC, is sent to the information switching centre 232 in the service switching point 230.

H8) When receiving the answer charging message from the intelligent peripheral 220, the charging unit 231 in the service switching point 230 begins charging, and forwards the answer charging message to the forward central office. However, if an answer message has been sent to the forward central office by the information switching centre 232 in the service switching point 230, the answer charging message will not be forwarded.

H9) When the user has finished its interaction with the system, the service control point 210 delivers a Disconnect Forward Connection (DFC) message to the information switching centre 232 in the service switching point 230 according to the service, to disconnect the connection to the resource of the intelligent peripheral 220.

The process of H9) is as follows:

H91) When the user has finished its interaction with the system, the intelligent peripheral 220 sends a resource report message to the service control point 210.

H92) The service control point 210 delivers a DFC message to the information switching centre 232 in the service switching point 230 according to the service, to disconnect the connection to the resource of the intelligent peripheral 220.

H93) The service switching point 230 sends a Release (REL) message to the intelligent peripheral 220, to disconnect the connection to the resource of the intelligent peripheral 220.

H94) The intelligent peripheral 220 sends a session ending message, e.g. a TC-END message, to the service control point 210, so as to terminate the current session with the service control point 210.

H95) The intelligent peripheral 220 sends a Release Complete (RLC) message to the service switching point 230, notifying the service switching point 230 that the current temporal connection has been released.

H10) When receiving the DFC message, the information switching centre 232 in the service switching point 230 stops charging, generates a resource charging call list, and reports a charging report to the service control unit 210. The charging for call connection is similar to the typical charging for an intelligent call.

H11) The service control point 210, under the control of the signaling flow, sends a Request report BCSM event/Access Control/Continue (RRBE/AC/CONTINUE) to the information switching centre 232 in the service switching point 230, to initiate a call to the called user. When receiving an answer message from a called office, the service switching point 230 does not forward the answer message to the forward central office.

In this embodiment, the service control point 210 sends an AC operation to the service switching point 230 in the process of H2, and an answer charging message is sent to the service switching point 230 in the process of H7. In this way, the charging function for utilizing the specialized resource of the intelligent peripheral and for call connection is achieved.

In the embodiments of the invention, whether to send an answer message related to charging or which answer message is to be sent is judged by the charging judgment unit 221 in the intelligent peripheral 220, without any modification to the framework of an existing intelligent network. An accurate charging, as well as a flexible charging, is achieved, so as to facilitate a variety of intelligent services (such as AD service). Further, by identifying an operation characteristic parameter delivered by a service control point 210, an intelligent peripheral 220 in the intelligent network determines whether to charge, when to send a charging or no-charging message.

While some embodiments are described above in detail to make the present invention better understood, a person of ordinary skill in the art will recognize that various modifications and variations may be made to the invention without departing the scope of the following claims. These modifications and variations therefore shall be covered within the protection scope of the invention.

## Claims

1. A communication system, **characterized by** comprising a service switching point 230 a service control point 210 and an intelligent periphera 220; wherein
the service control point 210 is adapted to send an operation characteristic parameter identifying whether to charge for a service to the intelligent peripheral;
the intelligent peripheral 220 is adapted to judge whether to request the service switching point to charge for the service according to the operation characteristic parameter identifying whether to charge for the service, the intelligent peripheral sends an answer no-charging message to the service switching point if a result of the judging is negative.

2. The communication system according to claim 1, **characterized in that**, the operation characteristic parameter is service and voice coding, the service and voice coding comprising a service coding identifying whether to charge and a voice coding identifying whether the voice coding is speech before answer.

3. The communication system according to claim 2, **characterized in that**, the service control point sends a charging control information to the service switching point if the service coding is charging and the voice coding is not speech before answer; and instructs the intelligent peripheral to send an answer charging message to the service switching point if the service switching point is requested to charge for the service.

4. The communication system according to claim 3, **characterized in that**, the charging control information is Access Control or Furnish Charging Information.

5. An intelligent peripheral 220, **characterized by** comprising:
a charging judgment unit 221, adapted to judge whether to request a service switching point 230 to charge for a service according to an operation characteristic parameter identifying whether to charge for the service when receiving the operation characteristic parameter; and
a charging forbidden unit 222, adapted to instruct the intelligent peripheral 220 to send an answer no-charging message to the service switching point 230 when a result of the judging is negative..

6. The intelligent peripheral according to claim 5, **characterized in that**, the intelligent peripheral is an intelligent peripheral or a physical entity having functions of an intelligent peripheral in a fixed intelligent network or a mobile intelligent network.

7. A service control point 210 **characterized by** comprising:
a parameter sending unit 212, adapted to send an operation characteristic parameter identifying whether to charge for a service to an intelligent peripheral 220, and
a charging control unit 211, adapted to decide, before sending the operation characteristic parameter identifying whether to charge for the service to the intelligent peripheral or when initiating a call to a called user, whether to send control information indicating to begin or terminate charging to a service switching point 230 according to the operation characteristic parameter identifying whether to charge for the service.

8. The service control point according to claim 7, **characterized in that**, the service control point further comprises the charging control unit is further adapted to send a charging control information to the service switching point if service coding is charging and voice coding is not speech before answer; and instruct the intelligent peripheral to send an answer charging message to the service switching point if the service switching point is requested to charge for the service.

9. A service switching point 230, **characterized by** comprising:
a message processing unit 233, adapted to instruct the service switching point 230 not to forward an answer no-charging message when the service switching point has sent an answer message to a forward central office and has received the answer no-charging message from an intelligent peripheral 220 and
a report unit 234, adapted to instruct the service switching point 230 to report a call duration by using a connection access control instruction and not to charge, when the message processing unit is in work and when the service switching point 230 receives a Disconnect Forward Connection operation.

10. The service switching point according to claim 9, **characterized by** further comprising a charging unit adapted to charge when receiving an answer charging message from the intelligent peripheral, and stop charging when receiving a service termination instruction from a service control point.

11. A charging method, **characterized by** comprising:
sending, by a service control point, an operation characteristic parameter identifying whether to charge for a service to an intelligent peripheral;
judging, by the intelligent peripheral, whether to request a service switching point to charge for the service according to the operation characteristic parameter identifying whether to charge for the service, wherein the intelligent peripheral sends an answer no-charging message to the service switching point if a result of the judging is negative.

12. The charging method according to claim 11, **characterized in that**, judging by the intelligent peripheral whether to request a service switching point to charge for the service comprises:
judging that the service is not charged if service coding in the operation characteristic parameter is no charging, or if the service coding is charging while voice coding is speech before answer.

13. The charging method according to claim 11, **characterized in that**, if the result of the judging is negative, when the service switching point receives the answer no-charging message, the answer no-charging message is not forwarded to a forward central office if an answer message has been sent to the forward central office.

14. The charging method according to claim 13, **characterized by** further comprising:
sending, by the service control point, a Request Report BCSM Event/Access Control/Continue to the service switching point after delivering a Disconnect Forward Connection instruction to the service switching point, to initiate a call to the called user; wherein when receiving an answer message from a called office, the service switching point does not forward the answer message to the forward central office;
reporting, by the service switching point, a connection access control instruction, wherein the service switching point reports a call duration by using the connection access control instruction and does not charge if the service switching point has received an Access Control instruction when establishing a temporary connection.

15. The charging method according to claim 11, **characterized in that**, if the result of the judging is yes, the method further comprises: sending, by the intelligent peripheral, an answer charging message to the service switching point.

16. The charging method according to claim 15, **characterized in that**, before sending by the intelligent peripheral the answer charging message to the service switching point, the method further comprises: sending, by the service control point, a charging request Access Control instruction to the service switching point requesting the service switching point to charge;
after sending by the intelligent peripheral the answer charging message to the service switching point, the method further comprises: charging for the service by the service switching point, stopping charging and reporting a charging result when the service switching point receives a disconnect connection message.

17. The charging method according to claim 16, **characterized in that**, after reporting the charging result, the method further comprises:
sending, by the service control point, a continue operation request carrying request call charging information to the service switching point, to initiate a call to a called user; or
sending, by the service control point, a continue operation request carrying stop call charging information to the service switching point, to initiate a call to a called user.

18. The charging method according to claim 15, **characterized in that**, before sending by the intelligent peripheral the answer charging message to the service switching point, the method further comprises: sending, by the service control point, furnish charging information to the service switching point requesting the service switching point to stop charging;
after sending by the intelligent peripheral the answer charging message to the service switching point, the method further comprises: charging for the service from a charging stopping point by the service switching point, stopping charging and reporting a charging result when the service switching point receives a disconnect connection message.

## Patentansprüche

1. Kommunikationssystem, **dadurch gekennzeichnet, dass** es einen Dienstvermittlungspunkt (230), einen Dienststeuerpunkt (210) und ein intelligentes Peripheriegerät (220) umfasst, wobei
der Dienststeuerpunkt (210) dafür ausgelegt ist, einen Operationseigenschaftsparameter, der identifiziert, ob für einen Dienst Gebühren zu berechnen sind, zu dem intelligenten Peripheriegerät zu senden;
das intelligente Peripheriegerät (220) dafür ausgelegt ist, gemäß dem Operationseigenschaftsparameter, der identifiziert, ob für den Dienst Gebühren zu berechnen sind, zu beurteilen, ob von dem Dienstvermittlungspunkt angefordert wird, für den Dienst Gebühren zu berechnen, und das intelligente Peripheriegerät eine Antwort-Keine-Gebührenberechnung-Nachricht zu dem Dienstvermittlungspunkt sendet, wenn ein Ergebnis der Beurteilung negativ ist.

2. Kommunikationssystem nach Anspruch 1, **dadurch gekennzeichnet, dass** es sich bei dem Operationseigenschaftsparameter um Dienst- und Sprachcodierung handelt, wobei die Dienst- und Sprachcodierung eine Dienstcodierung, die identifiziert, ob Gebühren zu berechnen sind, und eine Sprachcodierung, die identifiziert, ob die Sprachcodierung Sprache vor Antwort ist, umfasst.

3. Kommunikationssystem nach Anspruch 2, **dadurch gekennzeichnet, dass** der Dienststeuerpunkt eine Gebührenberechnungs-Steuerinformation zu dem Dienstvermittlungspunkt sendet, wenn die Dienstcodierung Gebührenberechnung ist und die Sprachcodierung nicht Sprache vor Antwort ist; und das intelligente Peripheriegerät anweist, eine Antwort-Gebührenberechnung-Nachricht zu dem Dienstvermittlungspunkt zu senden, wenn von dem Dienstvermittlungspunkt angefordert wird, für den Dienst Gebühren zu berechnen.

4. Kommunikationssystem nach Anspruch 3, **dadurch gekennzeichnet, dass** die Gebührenberechnungs-Steuerinformationen Zugangskontroll- oder Gebührenberechnungs-Hinterlegungs-Informationen sind.

5. Intelligentes Peripheriegerät (220), **dadurch gekennzeichnet, dass** es Folgendes umfasst:
eine Gebührenberechnungs-Beurteilungseinheit (221), die dafür ausgelegt ist, gemäß einem Operationseigenschaftsparameter, der identifiziert, ob für einen Dienst Gebühren zu berechnen sind, zu beurteilen, ob von einem Dienstvermittlungspunkt (230) angefordert wird, für einen Dienst Gebühren zu berechnen, wenn sie den Operationseigenschaftsparameter empfängt; und
eine Gebührenberechnung-Verboten-Einheit (222), die dafür ausgelegt ist, das intelligente Peripheriegerät (220) anzuweisen, eine Antwort-Keine-Gebührenberechnung-Nachricht zu dem Dienstvermittlungspunkt (230) zu senden, wenn ein Ergebnis der Beurteilung negativ ist.

6. Intelligentes Peripheriegerät nach Anspruch 5, **dadurch gekennzeichnet, dass** das intelligente Peripheriegerät ein intelligentes Peripheriegerät oder eine physische Entität mit Funktionen eines intelligenten Peripheriegeräts in einem intelligenten Festnetz oder einem intelligenten Mobilnetz ist.

7. Dienststeuerpunkt (210), **dadurch gekennzeichnet, dass** er Folgendes umfasst:
eine Parametersendeeinheit (212), die dafür ausgelegt ist, einen Operationseigenschaftsparameter, der identifiziert, ob für einen Dienst Gebühren zu berechnen sind, zu einem intelligenten Peripheriegerät (220) zu senden; und
eine Gebührenberechnungs-Steuereinheit (211), die dafür ausgelegt ist, vor dem Senden des Operationseigenschaftsparameters, der identifiziert, ob für den Dienst Gebühren zu berechnen sind, zu dem intelligenten Peripheriegerät oder beim Einleiten einer Verbindung zu einem angerufenen Benutzer, gemäß dem Operationseigenschaftsparameter, der identifiziert, ob für den Dienst Gebühren zu berechnen sind, zu entscheiden, ob Steuerinformationen, die angeben, Gebührenberechnung zu beginnen oder zu beenden, zu einem Dienstvermittlungspunkt (230) gesendet werden.

8. Dienststeuerpunkt nach Anspruch 7, **dadurch gekennzeichnet, dass** der Dienststeuerpunkt ferner die Gebührenberechnungs-Steuereinheit umfasst, die ferner dafür ausgelegt ist, eine Gebührenberechnungs-Steuerinformation zu dem Dienstvermittlungspunkt zu senden, wenn die Dienstcodierung Gebührenberechnung ist und die Sprachcodierung nicht Sprache vor Antwort ist; und das intelligente Peripheriegerät anzuweisen, eine Antwort-Gebührenberechnung-Nachricht zu dem Dienstvermittlungspunkt zu senden, wenn von dem Dienstvermittlungspunkt angefordert wird, für den Dienst Gebühren zu berechnen.

9. Dienstvermittlungspunkt (230), **dadurch gekennzeichnet, dass** er Folgendes umfasst:
eine Nachrichtenverarbeitungseinheit (233), die dafür ausgelegt ist, den Dienstvermittlungspunkt (230) anzuweisen, keine Antwort-Keine-Gebührenberechnung-Nachricht weiterzuleiten, wenn der Dienstvermittlungspunkt eine Antwortnachricht zu einer Weiterleitungs-Vermittlungsstelle gesendet und die Antwort-Keine-Gebührenberechnung-Nachricht von einem intelligenten Peripheriegerät (220) empfangen hat; und
eine Meldeeinheit (234), die dafür ausgelegt ist, den Dienstvermittlungspunkt (230) anzuweisen, durch Verwendung einer Verbindungs-Zugangskontrollanweisung eine Verbindungsdauer zu melden und keine Gebühren zu berechnen, wenn sich die Nachrichtenverarbeitungseinheit in Arbeit befindet und wenn der Dienstvermittlungspunkt (230) eine Weiterleitungs-Verbindungs-Trennungs-Operation empfängt.

10. Dienstvermittlungspunkt nach Anspruch 9, **dadurch gekennzeichnet, dass** er ferner eine Gebührenberechnungseinheit umfasst, die dafür ausgelegt ist, Gebühren zu berechnen, wenn sie eine Antwort-Gebührenberechnung-Nachricht von dem intelligenten Peripheriegerät empfängt, und die Gebührenberechnung zu stoppen, wenn sie eine Dienstbeendigungsanweisung von einem Dienststeuerpunkt empfängt.

11. Gebührenberechnungsverfahren, **gekennzeichnet durch** die folgenden Schritte:
Senden eines Operationseigenschaftsparameters, der identifiziert, ob für einen Dienst Gebühren zu berechnen sind, **durch** einen Dienststeuerpunkt zu einem intelligenten Peripheriegerät;
Beurteilen, ob von einem Dienstvermittlungspunkt angefordert wird, für den Dienst Gebühren zu berechnen, **durch** das intelligente Peripheriegerät gemäß dem Operationseigenschaftsparameter, der identifiziert, ob für den Dienst Gebühren zu berechnen sind, wobei das intelligente Peripheriegerät eine Antwort-Keine-Gebührenberechnung-Nachricht zu dem Dienstvermittlungspunkt sendet, wenn ein Ergebnis der Beurteilung negativ ist.

12. Gebührenberechnungsverfahren nach Anspruch 11, **dadurch gekennzeichnet, dass** das Beurteilen, ob von einem Dienstvermittlungspunkt angefordert wird, für den Dienst Gebühren zu berechnen, durch das intelligente Peripheriegerät Folgendes umfasst:
Beurteilen, dass keine Gebührenberechnung für den Dienst stattfindet, wenn die Dienstcodierung in dem Operationseigenschaftsparameter Keine-Gebührenberechnung ist oder wenn die Dienstcodierung Gebührenberechnung ist, während Sprachcodierung Sprache vor Antwort ist.

13. Gebührenberechnungsverfahren nach Anspruch 11, **dadurch gekennzeichnet, dass**, wenn das Ergebnis der Beurteilung negativ ist, wenn der Dienstvermittlungspunkt die Antwort-Keine-Gebührenberechnung-Nachricht empfängt, die Antwort-Keine-Gebührenberechnung-Nachricht nicht zu einer Weiterleitungs-Vermittlungsstelle weitergeleitet wird, wenn eine Antwortnachricht zu der Weiterleitungs-Vermittlungsstelle gesendet wurde.

14. Gebührenberechnungsverfahren nach Anspruch 13, **dadurch gekennzeichnet, dass** es ferner Folgendes umfasst:
Senden eines Request Report BCSM Event/Access Control/Continue durch den Dienststeuerpunkt zu dem Dienstvermittlungspunkt nach dem Abliefern einer Weiterleitungs-Verbindungs-Trennungs-Anweisung an den Dienstvermittlungspunkt, um eine Verbindung zu dem angerufenen Benutzer einzuleiten;
wobei, wenn eine Antwortnachricht von einer angerufenen Vermittlungsstelle empfangen wird, der Dienstvermittlungspunkt die Antwortnachricht nicht zu der Weiterleitungs-Vermittlungsstelle weiterleitet;
Melden einer Verbindungs-Zugangskontrollanweisung durch den Dienstvermittlungspunkt, wobei der Dienstvermittlungspunkt durch Verwendung der Verbindungs-Zugangskontrollanweisung eine Verbindungsdauer meldet und keine Gebühren berechnet, wenn der Dienstvermittlungspunkt beim Herstellen einer temporären Verbindung eine Zugangskontrollanweisung empfangen hat.

15. Gebührenberechnungsverfahren nach Anspruch 11, **dadurch gekennzeichnet, dass**, wenn das Ergebnis der Beurteilung ja ist, das Verfahren ferner Folgendes umfasst:
Senden einer Antwort-Gebührenberechnung-Nachricht durch das intelligente Peripheriegerät zu dem Dienstvermittlungspunkt.

16. Gebührenberechnungsverfahren nach Anspruch 15, **dadurch gekennzeichnet, dass** das Verfahren vor dem Senden der Antwort-Gebührenberechnung-Nachricht zu dem Dienstvermittlungspunkt durch das intelligente Peripheriegerät ferner Folgendes umfasst: Senden einer Gebührenberechnungs-Anforderungs-Zugangskontrollanweisung zu dem Dienstvermittlungspunkt durch den Dienststeuerpunkt, die von dem Dienstvermittlungspunkt anfordert, Gebühren zu berechnen; und das Verfahren nach dem Senden der Antwort-Gebührenberechnung-Nachricht zu dem Dienstvermittlungspunkt durch das intelligente Peripheriegerät ferner Folgendes umfasst: Berechnen von Gebühren für den Dienst durch den Dienstvermittlungspunkt, Stoppen der Gebührenberechnung und Melden eines Gebührenberechnungsergebnisses, wenn der Dienstvermittlungspunkt eine Verbindungs-Trennungs-Nachricht empfängt.

17. Gebührenberechnungsverfahren nach Anspruch 16, **dadurch gekennzeichnet, dass** das Verfahren nach dem Melden des Gebührenberechnungsergebnisses ferner Folgendes umfasst:
Senden einer Operationsfortsetzungsanforderung, die Verbindungs-Gebührenberechnungs-Anforderungsinformationen führt, durch den Dienststeuerpunkt zu dem Dienstvermittlungspunkt, um eine Verbindung zu einem angerufenen Benutzer einzuleiten; oder
Senden einer Operationsfortsetzungsanforderung, die Verbindungs-Gebührenberechnungs-Stoppinformationen führt, durch den Dienststeuerpunkt zu dem Dienstvermittlungspunkt, um eine Verbindung zu einem angerufenen Benutzer einzuleiten.

18. Gebührenberechnungsverfahren nach Anspruch 15, **dadurch gekennzeichnet, dass** das Verfahren vor dem Senden der Antwort-Gebührenberechnung-Nachricht durch das intelligente Peripheriegerät zu dem Dienstvermittlungspunkt ferner Folgendes umfasst: Senden von Gebührenberechnungs-Hinterlegungs-Informationen zu dem Dienstvermittlungspunkt durch den Dienststeuerpunkt, die von dem Dienstvermittlungspunkt anfordern, die Gebührenberechnung zu stoppen;
und das Verfahren nach dem Senden der Antwort-Gebührenberechnung-Nachricht durch das intelligente Peripheriegerät zu dem Dienstvermittlungspunkt ferner Folgendes umfasst: Berechnen von Gebühren für den Dienst von einem Gebührenberechnungs-Stopp-Punkt aus durch den Dienstvermittlungspunkt, Stoppen der Gebührenberechnung und Melden eines Gebührenberechnungsergebnisses, wenn der Dienstvermittlungspunkt eine Verbindungs-Trennungs-Nachricht empfängt.

## Revendications

1. Système de communication, **caractérisé en ce qu'**il comporte un point de commutation de service (230), un point de contrôle de service (210) et un périphérique intelligent (220) ; le point de contrôle de service (210) étant prévu pour envoyer au périphérique intelligent un paramètre caractéristique d'exploitation indiquant s'il y a lieu de facturer un service ;
le périphérique intelligent (220) étant prévu pour déterminer s'il y a lieu de demander au point de commutation de service de facturer le service en fonction du paramètre caractéristique d'exploitation indiquant s'il y a lieu de facturer le service, le périphérique intelligent envoyant un message de réponse de non-facturation au point de commutation de service si un résultat de la détermination est négatif.

2. Système de communication selon la revendication 1, **caractérisé en ce que** le paramètre caractéristique d'exploitation est un codage de service et de voix, le codage de service et de voix comportant un codage de service indiquant s'il y a lieu de facturer et un codage de voix indiquant si le codage de voix est « parole avant réponse ».

3. Système de communication selon la revendication 2, **caractérisé en ce que** le point de contrôle de service envoie une information de contrôle de facturation au point de commutation de service si le codage de service est « facturation » et si le codage de voix n'est pas « parole avant réponse »; et donne pour consigne au périphérique intelligent d'envoyer un message de réponse de facturation au point de commutation de service s'il est demandé au point de commutation de service de facturer le service.

4. Système de communication selon la revendication 3, **caractérisé en ce que** l'information de contrôle de facturation est une information de contrôle d'accès ou une information de facturation à fournir.

5. Périphérique intelligent (220), **caractérisé en ce qu'**il comporte:
une unité de détermination de facturation (221), prévue pour déterminer s'il y a lieu de demander à un point de commutation de service (230) de facturer un service en fonction d'un paramètre caractéristique d'exploitation indiquant s'il y a lieu de facturer le service à réception du paramètre caractéristique d'exploitation ; et
une unité d'interdiction de facturation (222), prévue pour donner pour consigne au périphérique intelligent (220) d'envoyer un message de réponse de non-facturation au point de commutation de service (230) lorsqu'un résultat de la détermination est négatif.

6. Périphérique intelligent selon la revendication 5, **caractérisé en ce que** le périphérique intelligent est un périphérique intelligent ou une entité physique dotée de fonctions d'un périphérique intelligent dans un réseau intelligent fixe ou dans un réseau intelligent mobile.

7. Point de contrôle de service (210), **caractérisé en ce qu'**il comporte:
une unité d'envoi de paramètre (212), prévue pour envoyer à un périphérique intelligent (220) un paramètre caractéristique d'exploitation indiquant s'il y a lieu de facturer un service ; et
une unité de contrôle de facturation (211), prévue pour décider, avant d'envoyer au périphérique intelligent le paramètre caractéristique d'exploitation indiquant s'il y a lieu de facturer le service ou lors du lancement d'un appel vers un utilisateur appelé,
s'il y a lieu d'envoyer à un point de commutation de service (230) une information de contrôle indiquant de commencer ou de mettre fin à la facturation, en fonction du paramètre caractéristique d'exploitation indiquant s'il y a lieu de facturer le service.

8. Point de contrôle de service selon la revendication 7, **caractérisé en ce que** le point de contrôle de service comporte en outre l'unité de contrôle de facturation qui est en outre prévue pour envoyer une information de contrôle de facturation au point de commutation de service si le codage de service est « facturation » et si le codage de voix n'est pas « parole avant réponse » ; et pour donner pour consigne au périphérique intelligent d'envoyer un message de réponse de facturation au point de commutation de service s'il est demandé au point de commutation de service de facturer le service.

9. Point de commutation de service (230), **caractérisé en ce qu'**il comporte:
une unité de traitement de messages (233), prévue pour donner pour consigne au point de commutation de service (230) de ne pas transmettre un message de réponse de non-facturation lorsque le point de commutation de service a envoyé un message de réponse à un central de retransmission et a reçu le message de réponse de non-facturation provenant d'un périphérique intelligent (220) ; et
une unité de compte rendu (234), prévue pour donner pour consigne au point de commutation de service (230) de rendre compte d'une durée d'appel en utilisant une instruction de contrôle d'accès à la connexion et de ne pas facturer, lorsque l'unité de traitement de messages est en fonctionnement et lorsque le point de commutation de service (230) reçoit une opération de coupure de la connexion vers l'avant.

10. Point de commutation de service selon la revendication 9, **caractérisé en ce qu'**il comporte en outre une unité de facturation prévue pour facturer lorsqu'elle reçoit un message de réponse de facturation provenant du périphérique intelligent, et pour cesser de facturer lorsqu'elle reçoit une instruction de coupure du service provenant d'un point de contrôle de service.

11. Procédé de facturation, **caractérisé en ce qu'**il comporte les étapes consistant à :
faire envoyer à un périphérique intelligent, par un point de contrôle de service, un paramètre caractéristique d'exploitation indiquant s'il y a lieu de facturer un service ;
faire déterminer, par le périphérique intelligent, s'il y a lieu de demander à un point de commutation de service de facturer le service en fonction du paramètre caractéristique d'exploitation indiquant s'il y a lieu de facturer le service, le périphérique intelligent envoyant un message de réponse de non-facturation au point de commutation de service si un résultat de la détermination est négatif.

12. Procédé de facturation selon la revendication 11, **caractérisé en ce que** l'étape consistant à faire déterminer, par le périphérique intelligent, s'il y a lieu de demander à un point de commutation de service de facturer le service comporte une étape consistant à :
déterminer que le service n'est pas facturé si le codage de service dans le paramètre caractéristique d'exploitation est « pas de facturation », ou si le codage de service est « facturation » alors que le codage de voix est « parole avant réponse ».

13. Procédé de facturation selon la revendication 11, **caractérisé en ce que**, si le résultat de la détermination est négatif, lorsque le point de commutation de service reçoit le message de réponse de non-facturation, le message de réponse de non-facturation n'est pas transmis à un central de retransmission si un message de réponse a été envoyé au central de retransmission.

14. Procédé de facturation selon la revendication 13, **caractérisé en ce qu'**il comporte en outre les étapes consistant à :
faire envoyer au point de commutation de service, par le point de contrôle de service, une demande de compte rendu d'événement BCSM / une instruction de contrôle d'accès / de continuation après avoir acheminé une instruction de coupure de la connexion vers l'avant jusqu'au point de commutation de service, en vue de lancer un appel vers l'utilisateur appelé ; le point de commutation de service, lorsqu'il reçoit un message de réponse d'un poste appelé, ne transmettant pas le message de réponse au central de retransmission ;
faire signaler, par le point de commutation de service, une instruction de contrôle d'accès à la connexion, le point de commutation de service rendant compte d'une durée d'appel en utilisant l'instruction de contrôle d'accès à la connexion et ne facturant pas si le point de commutation de service a reçu une instruction de contrôle d'accès lors de l'établissement d'une connexion temporaire.

15. Procédé de facturation selon la revendication 11, **caractérisé en ce que**, si le résultat de la détermination est positif, le procédé comporte en outre une étape consistant à : faire envoyer au point de commutation de service, par le périphérique intelligent, un message de réponse de facturation.

16. Procédé de facturation selon la revendication 15, **caractérisé en ce que**, avant de faire envoyer au point de commutation de service, par le périphérique intelligent, le message de réponse de facturation, le procédé comporte en outre une étape consistant à : faire envoyer au point de commutation de service, par le point de contrôle de service, une instruction de contrôle d'accès pour demande de facturation, demandant au point de commutation de service de facturer ;
et **en ce qu'**après avoir fait envoyer au point de commutation de service, par le périphérique intelligent, le message de réponse de facturation, le procédé comporte en outre des étapes consistant à : faire facturer le service par le point de commutation de service, cesser la facturation et rendre compte d'un résultat de facturation lorsque le point de commutation de service reçoit un message de coupure de la connexion.

17. Procédé de facturation selon la revendication 16, **caractérisé en ce qu'**après avoir rendu compte du résultat de facturation, le procédé comporte en outre une étape consistant à :
faire envoyer au point de commutation de service, par le point de contrôle de service, une demande de continuation d'exploitation véhiculant une information de demande de facturation de l'appel, en vue de lancer un appel vers un utilisateur appelé ; ou à faire envoyer au point de commutation de service, par le point de contrôle de service,
une demande de continuation d'exploitation véhiculant une information d'arrêt de la facturation de l'appel, en vue de lancer un appel vers un utilisateur appelé.

18. Procédé de facturation selon la revendication 15, **caractérisé en ce qu'**avant de faire envoyer au point de commutation de service, par le périphérique intelligent, le message de réponse de facturation, le procédé comporte en outre une étape consistant à : faire envoyer au point de commutation de service, par le point de contrôle de service, une information de facturation à fournir demandant au point de commutation de service de cesser la facturation ;
et **en ce qu'**après avoir fait envoyer au point de commutation de service, par le périphérique intelligent, le message de réponse de facturation, le procédé comporte en outre des étapes consistant à : facturer le service à partir d'un point d'arrêt de la facturation par le point de commutation de service, cesser la facturation et rendre compte d'un résultat de facturation lorsque le point de commutation de service reçoit un message de coupure de la connexion.
